# EUROPEAN PATENT SPECIFICATION

(11) **EP 0 880 442 B1**
(45) Date of publication and mention of the grant of the patent: **23.12.2009**
(21) Application number: 97907787.2
(22) Date of filing: 21.02.1997
(51) Int. Cl.: B60R 21/00, B60N 2/00

(54) **VEHICLE PASSENGER SENSING SYSTEM AND METHOD**
SYSTEM UND VORRICHTUNG ZUR ERFASSUNG DER INSASSEN EINES FAHRZEUGES
SYSTEME ET PROCEDE DE DETECTION DES PASSAGERS D'UN VEHICULE

(30) Priority: 23.02.1996 US 606175
(43) Date of publication of application: 02.12.1998
(73) Proprietor: Elesys North America Inc., Suwanee, GA 30024 (US)
(72) Inventor: JINNO, Kazunori, Morrow, GA 30260 (US); SEKIDO, Saikichi, Tokyo 153 (JP); RITTMUELLER, Philip, H., St. Charles, IL 60174 (US)
(74) Representative: McLeish, Nicholas Alistair Maxwell
(86) International application number: PCT/US1997/002797
(87) International publication number: WO 1997/030864

(56) References cited:
- WO-A-97/31238
- DE-A1- 4 417 827
- DE-A1- 19 503 203
- US-A- 3 740 567
- US-A- 3 863 209
- US-A- 4 700 973
- US-A- 4 796 013
- US-A- 4 796 013
- US-A- 4 885 566
- US-A- 5 002 308
- US-A- 5 071 160
- US-A- 5 074 583
- US-A- 5 161 820
- US-A- 5 232 243
- US-A- 5 330 226
- US-A- 5 366 241
- US-A- 5 400 487
- US-A- 5 404 128
- US-A- 5 431 438
- US-A- 5 439 249
- US-A- 5 446 661
- US-A- 5 482 314
- US-A- 5 494 311
- US-A- 5 525 843
- US-A- 5 602 734

## Description

### BACKGROUND OF THE INVENTION

### 1. Field of the Invention

The present invention generally relates to vehicle passenger restraint systems, and in particular to a passenger sensing system for detecting the presence and position of passengers within a vehicle.

### 2. Description of the Prior Art

Since their introduction in the late 1980's, airbags have saved lives and reduced the severity of countless injuries resulting from automobile accidents. However, airbags have also taken lives and caused injuries to very young children when the force of a deploying airbag struck a rear-facing child safety (infant) seat. In response to these tragic events, the National Transportation Safety Board (NTSB) issued a recommendation to the automotive industry to develop "smart" passenger restraint systems which can detect a rear-facing child safety seat and automatically de-activate adjacent airbags. The present invention is provided in response to the NTSB's recommendation.

Several passenger sensing systems are currently known. A first sensing system employs a load-dependant switch is mounted under the seat cushion of a vehicle seat. When the seat is occupied by an object of sufficient weight, the switch is activated to arm the passenger restraint system. However, a disadvantage of this system is that it cannot distinguish between, for example, an occupied child safety seat and a small passenger. Such a system is disclosed in U.S. Patent No. 3,863,209.

A second passenger sensing system uses optical or ultrasonic transmitters and sensors to detect the position and motion of a passenger. However, the optical and ultrasonic transmitters and sensors are expensive and difficult to install properly within a vehicle cabin. Such a system is disclosed in U.S. Patent No. 5,446,661.

A third type of passenger sensing system utilizes a pair of electrodes mounted on a vehicle seat to detect a passenger. With this system, the presence or absence of a passenger changes the capacitance between the electrodes. The electrodes are connected to a variable oscillator circuit whose frequency is changed in response to the electrode capacitance. By measuring the frequency of the variable oscillator circuit and comparing the measured frequency with a threshold value, the presence or absence of the passenger is determined. The threshold value is selected such that a passenger restraint system is activated when the detected passenger is larger than a predetermined size, and is de-activated when the detected passenger is smaller than the predetermined size. This capacitive passenger sensing system is disclosed in PCT Application No. WO 95/21752.

A problem with the foregoing variable oscillator passenger sensing system is that airbags are de-activated even in "safe" situations, such as when a forward-facing child safety seat is used.

Further, with this variable oscillator sensing method, the effect of an object on the capacitance between the electrodes is substantially independent of its orientation. Therefore, it is difficult to use this method to distinguish between, for example, a child riding in a front-facing child seat and a child riding in a rear-facing infant seat. That is, a child will produce the same variable oscillator frequency whether the child is riding in a rear-facing infant seat or in a forward-facing child safety seat.

In view of the shortcomings of the prior art passenger sensing systems, what is needed is an economical passenger sensing system and method which can distinguish between a front-facing child seat and a rear-facing infant seat.

Document US-A-4 796 013 discloses a capacitive occupancy detector apparatus including a personnel containment device having first and second electrodes which will define an electric field therebetween, according to the preambles of claims 1 and 7.

Document DE 44 17 827 A1 discloses a method for detecting the presence of persons on vehicle seats by means of at least one measuring electrode connected to a voltage source and at least one further reference electrode amended to a voltage source.

### SUMMARY OF THE INVENTION

There is provided a vehicle passenger sensing system as set out in claim 1, and a method for sensing a passenger in a vehicle as set out in claim 7.

In accordance with the present invention, a vehicle passenger sensing system is disclosed in which the presence and position of a passenger is determined by transmitting an electric field signal from a transmitter electrode and measuring the resulting currents at a plurality of receiver electrodes. The magnitude of the receiver current is affected by the presence of a passenger in the "path" between the transmitter and receiver electrodes. By measuring and comparing the receiver currents at a plurality of receiver electrodes, it is possible to distinguish between a child in a front-facing child safety seat and a child in a rear-facing infant seat, thereby providing "smart" control of a passenger restraint system.

In accordance with a first embodiment of the present invention, first and second electrodes are mounted on a base portion of a vehicle seat. The first electrode is connected to an alternating current signal generator such that an electric field signal is generated in the vicinity of the seat. A third electrode is mounted on a back support portion of the seat. The electric field produces receiver currents at the second and third electrodes which are amplified, then measured and compared by a controller. When the magnitudes of the measured receiver currents indicate the presence of a child in a rear-facing infant seat, the passenger sensing system generates command signals which are used by a passenger restraint system to, for example, de-activate an airbag located adjacent the safety seat such that the airbag does not deploy in the event of a collision. When the magnitudes of the measured electric fields indicate the presence of an adult passenger or a front-facing child seat, the passenger restraint system is controlled to activate the airbag.

In accordance with another aspect of the first embodiment, the first, second and third electrodes include a conductive layer separated from a ground plane by an insulating layer. In a first embodiment, the conductive layer includes a woven conductive fabric mounted on a knitted non-conductive fabric, which in turn is mounted on a foam layer. The conductive fabric is connected either to the signal generator or the controller. A metal supporting structure of the vehicle seat (i.e., a metal frame or spring) acts as the ground plane. In a second embodiment, each electrode includes a pair of metal layers separated by an insulating layer. One of the metal layers is connected either to the signal generator or the controller, and the other metal layer is connected to ground.

In accordance with a second embodiment of the present invention, a plurality of electrodes mounted on a vehicle seat and connected to a switching circuit. The switching circuit connects a selected electrode to a signal generator such that the selected electrode generates an electric field. The switching circuit also connects a first set of the remaining electrodes to a controller for determining the magnitudes of the electric field at these electrodes. Subsequently, the switching circuit connects another electrode to the signal source and measures the resulting electric field magnitudes at a second set of electrodes. This process is continued in a cycle such that all of the electrodes are used as the transmitter electrodes. The passenger restraint system is activated by the controller when the magnitudes of the electric fields measured during the cycle meet predetermined criteria.

A method for sensing a passenger in a vehicle seat in accordance with the present invention includes transmitting an electric field from a first location on the seat, detecting and measuring strengths of the electric field at two or more locations on the seat, then comparing the measured strengths to determine the presence and position of a passenger.

### BRIEF DESCRIPTION OF THE DRAWINGS

These and other aspects of the present invention are described in greater detail in the following description which references the appended drawings, in which:
Fig. 1 shows a diagram of a passenger sensing system in accordance with a first embodiment of the present invention.
Fig. 2 shows a cross sectional side view of a first electrode used in accordance with the present invention.
Figs. 3(A) and 3(B) respectively show plan and cross sectional side views of a second electrode used in accordance with the present invention.
Fig. 4 shows a method for detecting the presence of a passenger in accordance with the first embodiment.
Fig. 5 shows an exploded perspective view of a passenger sensing system in accordance with a second embodiment of the present invention.
Fig. 6 shows a simplified diagram showing connections between the electrodes and the controller of the passenger sensing system in accordance with the second embodiment.
Fig. 7 shows a circuit diagram of the controller in accordance with the second embodiment.
Figs. 8(A), 8(B), 8(C) and 8(D) show circuit diagrams of various subsystems of the controller shown in Fig. 7;
Fig. 9 shows a flow diagram of process for sensing passengers in accordance with the second embodiment of the present invention; and
Figs. 10(A), 10(B), 10(C) and 10(D) show simplified diagrams indicating optional electrode arrangements.

### DESCRIPTION OF THE PREFERRED EMBODIMENT

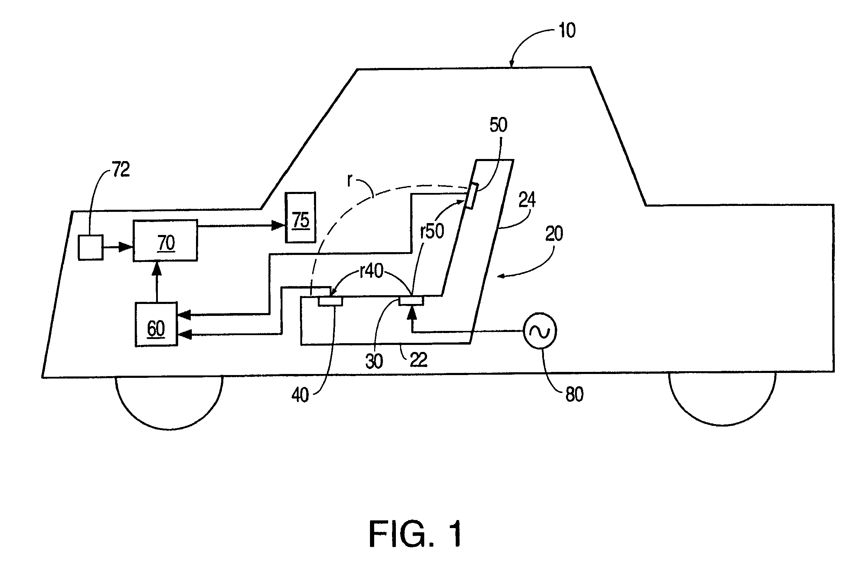

Referring to Fig. 1, a passenger sensing/restraint system in accordance with a first embodiment of the present invention is shown in association with a vehicle 10. Although the shape of the vehicle 10 may suggest an automobile, the passenger sensing/restraint system of the present invention may also be incorporated into any type of passenger vehicle, including buses, aircraft and boats.

The vehicle 10 includes a seat 20 which is attached to the vehicle 10 using known techniques. The seat 20 includes a base portion 22 and a back support portion 24. A transmitter electrode 30 and a first receiver electrode 40 are mounted on the base portion 22, with the transmitter electrode 30 being positioned between the receiver electrode 40 and the back support portion 24. A second receiver electrode 50 is mounted on the back support portion 24.

The transmitter electrode 30 generates an electric field r in response to an alternating current (A.C.) signal received from a signal source (generator) 80 (preferably 50 to 100 kHz). For explanatory purposes, the electric field r is represented in Fig. 1 with a semi-circular dashed line located over the seat 20--the electric field r is more accurately described as a substantially semi-spherical area located over the transmitter electrode 30.

Electric field "current paths" (indicated as lines r40 and r50 in Fig. 1) extend from transmitter electrode 30 to the receiver electrodes 40 and 50, respectively. In the following description, the current path designations identify the receiver electrode at which a current is measured in response to the electric field signal generated by a transmitter electrode. For example, in Fig. 1, path r40 represents the current at electrode 40 produced in response to an electric field transmitted from electrode 30.

The magnitudes of the receiver currents at the receiver electrodes 40 and 50 are inversely proportional to their distance from the transmitter electrode 30, and are proportional to the area of the electrodes (antennae), the transmission frequency and the signal power. Further, the extent to which a passenger is located in the current paths r40 and r50 effects the magnitudes of the receiver currents. For example, if an adult passenger is sitting on the transmitter electrode 30 and receiver electrode 40, and leaning against the receiver electrode 50, then the receiver currents r40 and r50 are typically at or near a maximum value. However, when a passenger is positioned away from the transmitter electrode 30 but within the current path (such as a child in a child safety seat), the passenger tends to have less of an effect on the electric field such that the receiver current is less than the maximum value, but greater than an "empty seat" value.

In accordance with the present invention, the receiver currents at the receivers 40 and 50 are measured and compared with stored information to distinguish between a normally-seated passenger (typically indicated by maximum current values) and a child riding in child safety seat (typically indicated by intermediate current values). Further, by comparing intermediate current values for current paths r40 and r50 using predetermined criteria, the present invention provides a method for distinguishing between a child in a front-facing safety seat and a child in a rear-facing infant seat. For example, when a child is riding in a rear-facing infant seat, the child's body is typically parallel to the base portion 22 of the seat 20 (see Fig. 1). This arrangement produces a relatively higher current on path r40 in comparison to the current on path r50. Conversely, a child in a forward facing child seat produces a relatively higher current on path r50 in comparison to the current on path r40. By comparing the measured currents, it is possible to determine the type of child safety seat being used. When a rear-facing infant seat is detected, the passenger restraint system de-activates adjacent airbags.

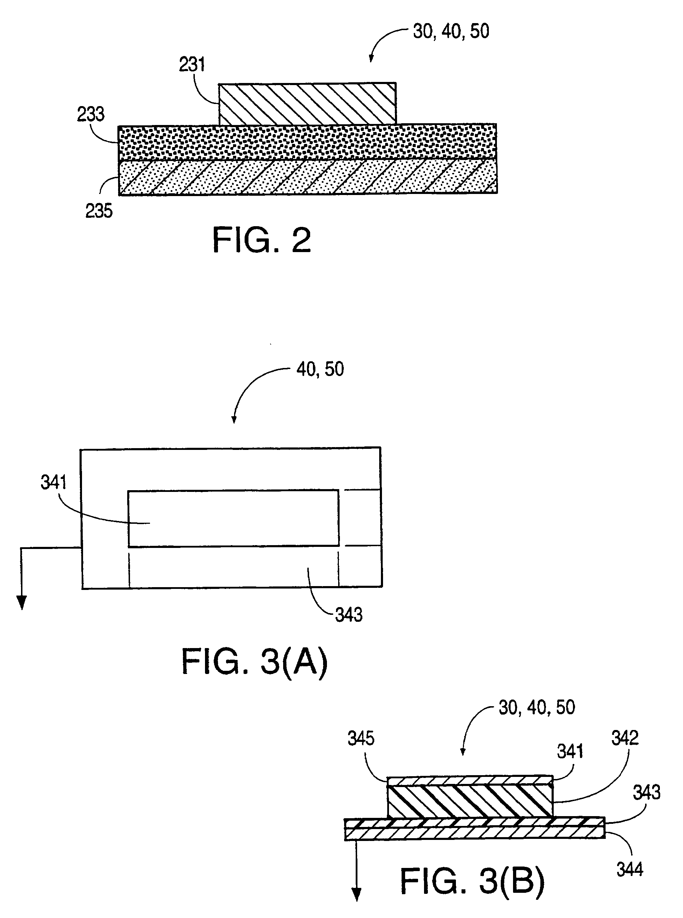

Fig. 2 shows a first electrode, Figs. 3(A) and 3(B) disclose a second electrode which may be used in the passenger sensing system according to the present invention. The electrodes disclosed in these figures generally include a conductive layer which is separated from a ground plane separated by an insulating layer. The conductive layer is used both as a transmission antenna and as a reception antenna. The stability of the electric field generated by these electrodes depends on the ground plane and the transmission frequency. With the disclosed electrodes, the transmission frequency should be in the range of 50 to approximately 100 kHz, with a preferred transmission frequency of approximately 100 kHz. The ground plane stabilizes, but weakens, the transmitted/received signal. When a high transmission frequency is used, a low ground plane impedance is necessary. Therefore, an insulating layer provided between the conductive layer and the ground plane to reduce the weakening effect of the ground plane.

Fig. 2 shows a first type of electrode 30, 40, 50 which includes a conductive fabric 231 mounted on a knitted fabric 233, which in turn is mounted on a foam layer 235. When mounted on a vehicle seat, a metal frame or spring arrangement of the vehicle seat serves as the ground plane. In one embodiment, the conductive fabric 231 of each electrode has a length of 300 mm and width of 170 mm. A suitable material for use as the conductive fabric 231 is produced by Seiren Co., Ltd. of Osaka, Japan. The knitted fabric 233 is formed from polyester. The conductive material 231 is attached to the knitted fabric 233 by gluing or sewing.

Figs. 3(A) and 3(B) respectively show plan and side section views of a second type of electrode 30, 40, 50. The receiver electrode includes an upper metal layer 341 (preferably copper foil) formed over an upper insulating layer 342. The upper insulating layer 342 is formed over a lower insulating layer 343 (preferably a sheet of .254 mm thick FR4) and a lower metal layer 344 (preferably .254 mm thick copper). The upper metal layer 341 and upper insulating layer 342 are approximately 300 mm by 50 mm wide, and the lower insulating layer 343 and lower metal layer 344 are approximately 350 mm long and 110 mm wide. The lower metal layer 344 forms the ground plane. The upper insulating layer 342 is preferably 10 mm thick silicon rubber, but can also be another dielectric material such as plexiglass, Teflon or polyamide.

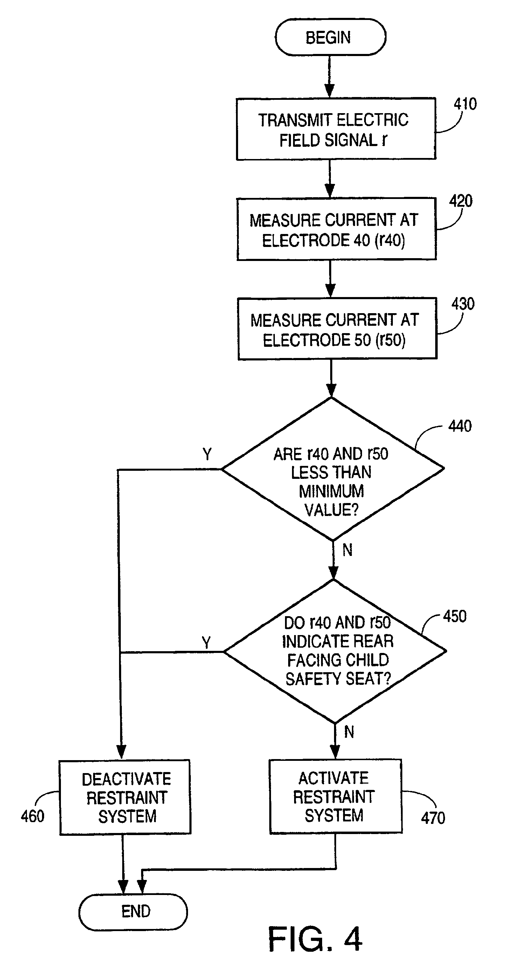

Fig. 4 shows a basic flow diagram illustrating a method for determining the presence of a passenger in accordance with the first embodiment of the present invention.

In initial step 410, transmitter electrode 30 transmits the electric field r. During transmission, A.C. signals from the signal source 80 (see Fig. 1) are applied to the conductive layer 231/341. This causes the conductive layer 231/341 to generate an electric field which is substantially located above the conductive layer 231/341.

In step 420, a magnitude of the electric field along path r40 causes current to flow in the conductive layer 231/341 of the receiver electrode 40. These currents are transmitted through a lead (and preferably via an amplifier, not shown) to the controller 60.

Likewise, in step 430, a magnitude of the electric field along path r40 causes a current in the receiver electrode 50. This current is transmitted from receiver electrode 50 to controller 60.

In step 440, the currents associated with paths r40 and r50 are compared with preset minimum values. If the measured currents from paths r40 and r50 are below the minimum values (indicating an unoccupied seat), then the controller 60 generates a "de-activate" command signal (step 460). If the measured strengths are greater than the minimum values, then, in step 450, the currents from paths r40 and r50 are compared. If the comparison indicates a rear-facing infant seat (for example, when the measured current on path r50 is less than the measured current on path r40), then the controller 60 generates a "de-activate" command signal (step 460). Conversely, if the measured current on path r50 is greater than or equal to the current on path r40, the controller 60 generates an "activate" command signal.

Referring again to Fig. 1, in accordance with the present invention, the "activate" and "de-activate" command signals generated by the controller 60 are transmitted to a passenger restraint controller 70. In response to the "activate" command signal, the passenger restraint controller 70 activates an airbag 75 in response to a collision signal received, for example, from a collision detector 72. In response to the "de-activate" command signal, the passenger restraint controller 70 ignores collision signals, thereby preventing activation of the airbag 75 in response to a collision signal.

The present invention is not limited to the specific structure described above in the first embodiment. For example, although the transmitter electrode 30 is shown in Fig. 1 as mounted on the seat portion 22, the transmitter electrode 30 may be mounted on the back support portion 24 of the seat 20. Additional variations of the present invention are discussed in the following description.

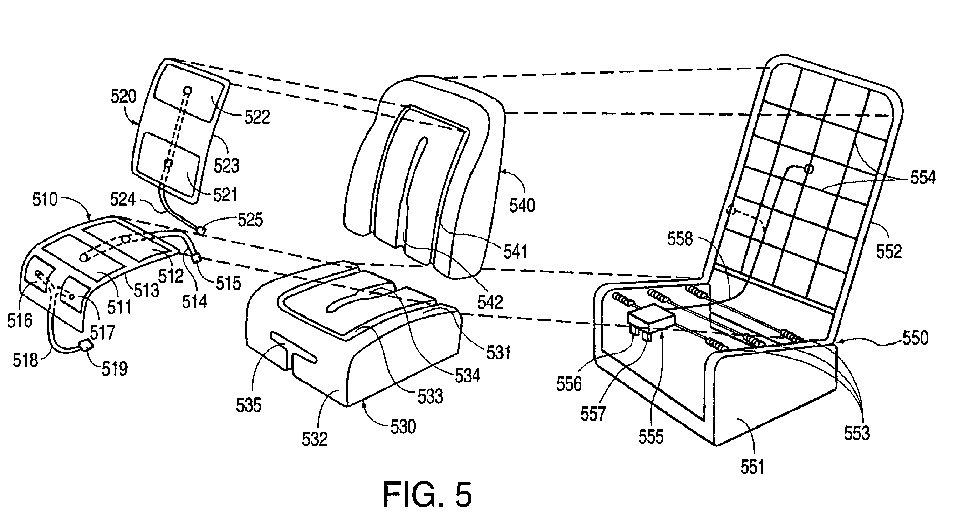

Fig. 5 shows an exploded perspective view of a passenger sensing arrangement in accordance with a second embodiment of the present invention. The passenger sensing arrangement includes a lower electrode assembly 510 and an upper electrode assembly 520 which are mounted onto a foam seat cushion 530 and a foam back cushion 540, respectively. The foam seat cushion 530 and foam back cushion 540 are in turn supported by a seat frame 550.

The lower electrode assembly 510 includes a first electrode 511 and a second electrode 512 formed on a knitted fabric (non-conductive) sheet 513. The first electrode 511 and second electrode 512 are attached via individual conductors provided in a wire harness 514 to a connector 515. The conductors may be attached to the electrodes, for example, using a conductive adhesive or other structure. The first electrode also includes a first half-sized (fifth) electrode 516 and a second half-sized (sixth) electrode 517 which are attached via individual conductors provided in a wire harness 518 to a connector 519.

The upper electrode assembly 520 includes a third electrode 521 and a fourth electrode 522 formed on a knitted fabric (non-conductive) sheet 523. The third electrode 521 and fourth electrode 522 are attached via individual conductors provided in a wire harness 524 to a connector 525.

The foam cushions 530 and 540 are provided with trenches for recessing the edges of the sheets 513 and 523 and wire harnesses 514, 518 and 524 to provide a comfortable seat for a passenger. Specifically, a peripheral trench 533 is formed in a seat portion 531 which receives an outer edge of the sheet 513 when the lower electrode assembly 510 is mounted thereon. Similarly, a first wire harness trench 534 and a second wire harness trench 535 are formed in the seat portion 531 and a front portion 532 of the foam seat cushion 530, respectively, for recessing the wire harnesses 514 and 518. The foam back cushion 540 similarly includes a peripheral trench 541 which receives an outer edge of the sheet 523 and a wire harness trench 542 for receiving the wire harness 524 when the upper electrode assembly 520 is mounted thereon.

The seat frame 550 includes a base portion 551 and a back portion 552. The base portion 551 includes a plurality of springs 553 for supporting foam seat cushion 530, and the back portion 552 includes a matrix of springs 554 which support the back cushion 540. Finally, a controller 555 is fixedly mounted onto the seat frame 550 adjacent a front end of the base portion 551. The controller 555 includes a first socket 556 for receiving the connectors 515, 519 and 525, and a second socket 557 through which signals are transmitted via a separate conductor (not shown) to, for example, a passenger restraint controller mounted on a vehicle body. A ground line 558 of the controller 555 is connected to the springs 554, but can also be connected directly to the seat frame 550 (as indicated by the dashed line).

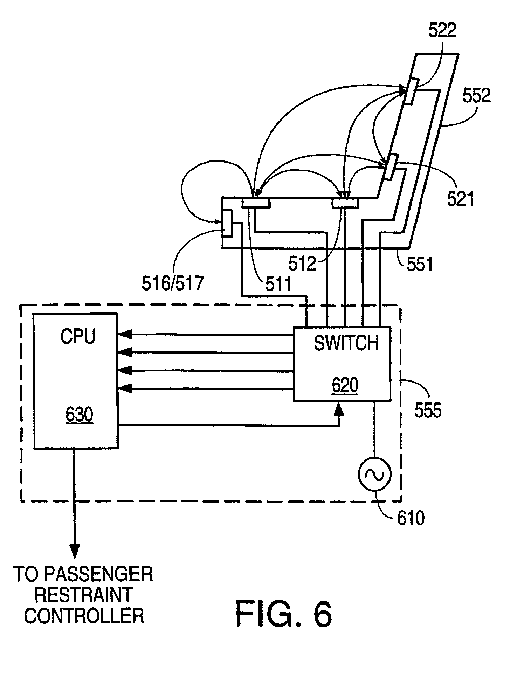

Fig. 6 shows a simplified diagram indicating connections between the controller 555 and the electrodes in accordance with the second embodiment. The controller 555 includes an A.C. signal generator 610, a switching circuit 620 and a microprocessor or central processing unit (CPU) 630. The switching circuit 620 is connected between the electrodes 511, 512, 521 and 522 and the signal generator 610. The switching circuit 620 selectively connects one of the electrodes 511, 512, 521 and 522 to the signal generator 610 in response to a control signal received from CPU 630. In addition, the switching circuit 620 is connected between the electrodes 511, 512, 516, 517, 521 and 522 and the CPU 630 such that the switching circuit 620 connects one or more of these electrodes to the inputs of the processor 620 in response to control signals received from processor 620.

In accordance with the embodiment shown in Figs. 5 and 6, a selected one of the electrodes 511, 512, 521 and 522 is connected to the signal generator 610 such that to the selected electrode transmits an electric field, and one or more of the remaining electrodes serve as receivers for detecting the electric field strength along selected paths. For example, when electrode 512 is connected by switching circuit 620 to the signal generator 610, electrodes 511, 521 and 522 are connected through switching circuit 620 to the inputs of CPU 630. Similarly, when electrode 521 is connected by switching circuit 620 to the signal generator 610, electrodes 511, 512 and 522 are connected through switching circuit 620 to the inputs of CPU 630. By alternating the transmitting electrode in this manner, a total of N(N-1) (where N is the number of electrodes) current path measurements are available for sensing passengers. For example, as shown in Fig. 6, the four electrodes 511, 512, 521 and 522 provide twelve current path measurements (indicated as double-arrow lines extending between these electrodes). However, it is also possible to obtain measurements from the transmitting electrode, thereby increasing the total number of current measurements to N² (that is, in the example of Fig. 6, a total of sixteen current measurements) which may be used to sense the presence/position of passengers. Therefore, the passenger sensing system of the embodiment shown in Figs. 5 and 6 provides an advantage over the first embodiment (shown in Fig. 1) in that additional currents (electric field paths) may be measured, thereby increasing the resolution of the passenger sensing process and improving the system's ability to avoid undesirable activation of an airbag when a rear-facing infant seat is present. Further, the electrodes 516 and 517 may be used to detect an out-of-position adult passenger, thereby preventing injury caused when an air bag deploys when the adult passenger is too close to the dashboard of the vehicle. Utilization of the sensors 516 and 517 is discussed below.

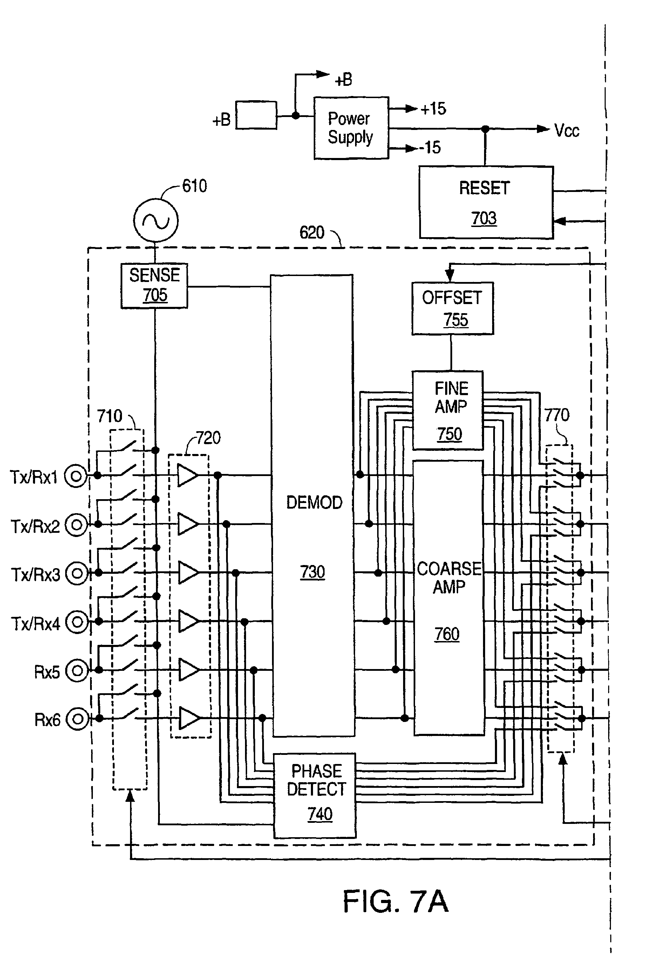

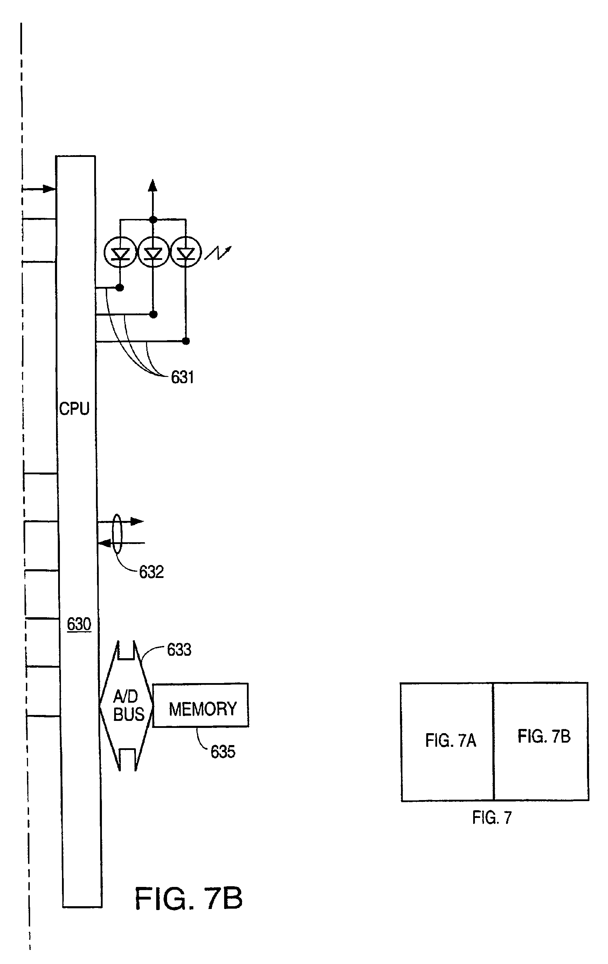

Fig. 7 is a simplified circuit diagram of the controller 555 shown in Fig. 6. As discussed above, the controller 555 includes the signal generator 610, the switching circuit 620 and the CPU 630.

In addition, the controller 555 includes a RESET circuit 703 which is connected between Vcc (5 volts) and the CPU 630. The RESET circuit resets the CPU in response to variations in Vcc or in response to a "runaway" condition of the CPU 630. Specifically, the RESET circuit 703 monitors Vcc and transmits a reset signal to the CPU 630 when an unusual reduction in Vcc is detected, thereby preventing a "runaway" condition of the CPU 630. In addition, the RESET circuit 703 protects against the "runaway" condition at power up caused by instability in Vcc and system clock oscillations. Finally, the RESET circuit 703 acts as a watchdog timer circuit by monitoring a watchdog pulse signal generated by the CPU 630 which indicates normal operation. When the watchdog pulse signal breaks off, the RESET circuit 703 assumes a runaway condition, and transmits a reset signal to the CPU 630.

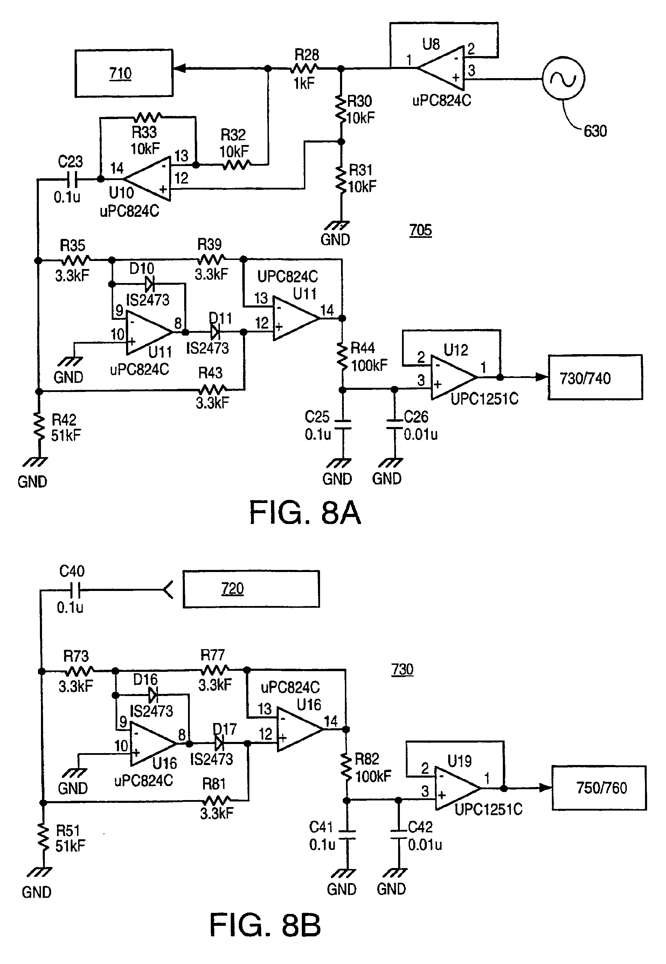

The A.C. transmission signal (approximately 100 kHz) generated by signal generator 610 optionally passes through a current sensing circuit (SENSE) 705 before being applied to a selected electrode. The purpose of the current sensing circuit 705 is to detect the amount of current applied to the selected electrode, which varies in response to the presence or absence of a passenger. By detecting the current of the transmission signal, it is possible to detect the sitting position of a passenger in detail without increasing the number of electrodes utilized by the passenger sensing system. A detailed circuit diagram illustrating an example of the current sensing circuit 705 is shown in Fig. 8(A).

Transmission and reception signals are transmitted to and from the electrodes through a first switch array 710 which is controlled by the CPU 630. The electrodes 511, 512, 521 and 522 (see Fig. 6) are connected to terminals Tx/Rx1, Tx/Rx2, Tx/Rx3 and Tx/Rx4 which are connected to one side of the first switch array 710. The transmission signal from current sensing circuit 705 is selectively applied to one of the electrodes 511, 512, 521 and 522 through a first set of switches of the first switch array 710 in response to a transmission control signal from the CPU 630. The electrodes 516 and 517 are connected to terminals Rx5 and Rx6, respectively. The reception signal (current) generated in a selected one of the electrodes current sensing circuit 705 is selectively transmitted through a second set of switches of the first switch array in response to a reception control signal generated by the CPU 630.

An amplifier block 720 is connected to the first switch array 710 and converts the reception signal currents generated in the electrodes 511, 512, 521, 522, 516 and 517 into voltage signals V (where V equals the current times 10,000), and then amplifies the voltage V using a gain of 6.

The amplified voltage signals are output from amplifier block 720 to a demodulator (DEMOD) circuit 730 and to a phase detection circuit 740.

The demodulator circuit 730 receives the signal from the amplifier block 720 and from the current sensing circuit 705. The demodulator circuit 730 changes the level (amplitude value) of the received signal (which is an A.C. signal) to a direct current (D.C.) voltage signal which can be read by the CPU 630. A detailed circuit diagram illustrating an example of the demodulator circuit 730 is shown in Fig. 8(B).

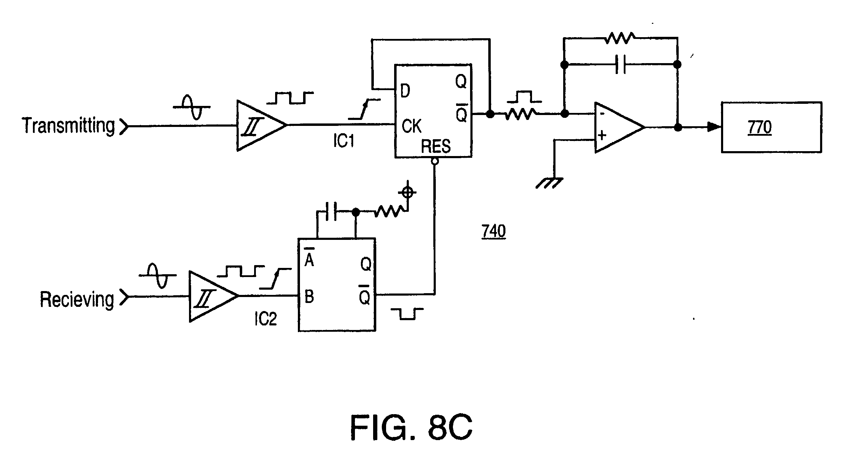

The phase detection circuit 740 receives the reception signal from the amplifier block 720 and the transmission signal from the current sensing circuit 705. The phase detection circuit 740 detects the difference of the reception signal relative to the transmission signal. This enables detection of the sitting position of a passenger in detail without increasing the number of electrodes utilized by the passenger sensing system. A detailed circuit diagram illustrating an example of the phase detection circuit 740 is shown in Fig. 8(C). Transmission and reception signals are converted into square wave signals. The rising edge of the transmission signal triggers the clock input of D-type flip flop IC1 and generating a high output signal. The rising edge of the reception signal causes flip-flop IC2 to generate a one-shot low signal which is applied to the RESET terminal of IC1 through an inverter. This causes IC1 to generate a low output. As a result, IC1 generates an output signal representing a phase difference between the transmission and reception signals which is applied to the CPU 630 through an integrator.

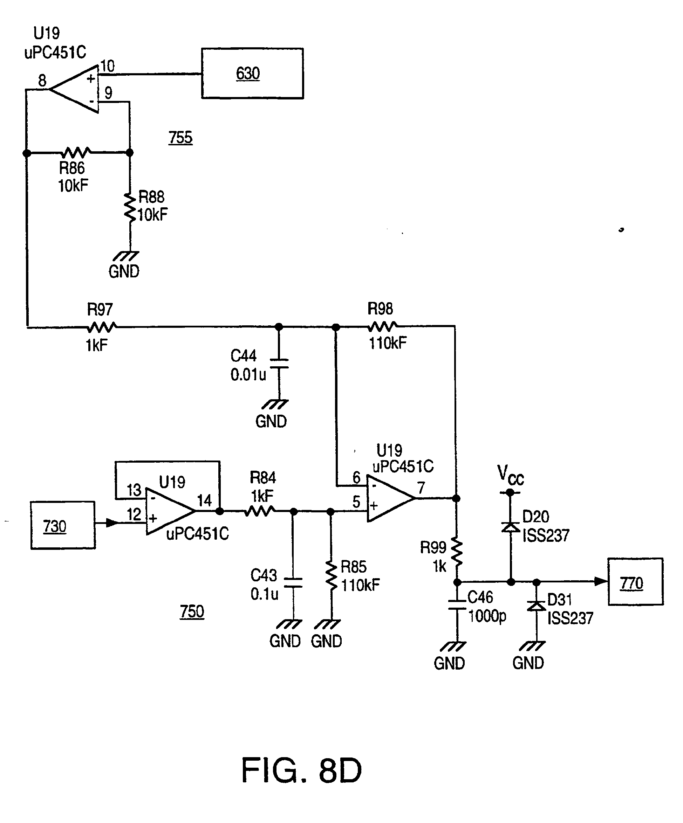

The D.C. signal output from the demodulator circuit 730 is transmitted through a fine amplifier 750 and a coarse amplifier 760. A gain of the fine amplifier 750 is controlled by the CPU 630 through an offset exchange circuit 755. This allows detection of minute variations in the reception signal which provide more detailed information regarding a passenger's position on the vehicle seat. A detailed circuit diagram illustrating an example of the fine amplifier 750 and offset exchange circuit 755 is shown in Fig. 8 (D) .

Finally, output signals from the phase detection circuit 740, fine amplifier 750 and coarse amplifier 760 are selectively transmitted to the CPU 630 through a second switch array 770, which is controlled by the CPU 630.

The CPU 630 communicates with the passenger restraint system (not shown) on lines 632 in response to the signals applied through the second switch array 770. The CPU 630 may also generate LED control signals on lines 631 which may be used to indicate operating conditions, and communicate with an EEPROM 635 on bus 633. A preferred controller 630 is a µPD78052CG microprocessor manufactured by NEC Corporation of Tokyo, Japan. Of course, the functions of controller 630 may be implemented by another digital processor. Further, the functions of switching circuit 620 may be implemented in an application specific integrated circuit (ASIC).

As mentioned above, the controller 630 transmits control signals to the switching circuit 620, thereby connecting one of the electrodes to the signal generator 610, and connecting the reception signals on one or more of the remaining electrodes to the inputs of the controller 630. The reception signals are converted into eight bit digital signals whose value is determined by the magnitude of the current (in proportion to a selected maximum current value). These eight bit digital signals are then subjected to mathematical operations and compared with stored data to determine whether the seat upon which electrodes are mounted is empty (unoccupied), occupied by a normally-seated passenger, occupied by a child in a rear-facing infant seat, or occupied by a child in a front-facing child safety seat or a booster seat. The stored data used to determine the occupancy of the seat is stored in EEPROM 635, which also stores instruction codes used by the controller 630. Once this determination is complete, the controller 630 generates passenger restraint command signals which are transmitted to a passenger restraint system (not shown) over lines 632.

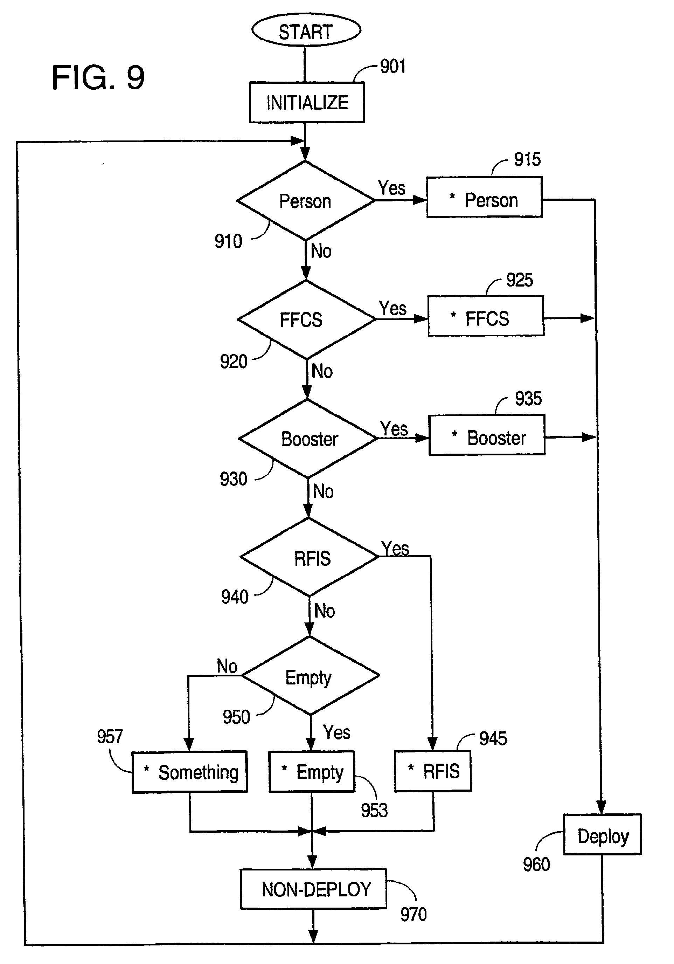

Fig. 9 shows a flow diagram indicating a flow diagram illustrating a preferred method of controlling a passenger restraint controller in accordance with the second embodiment of the present invention. In the following description, the current path designations identify the transmitting electrode and receiving at which a current is measured. For example, path r12 represents the current at electrode 512 produced in response to an electric field transmitted from electrode 511 (refer to Fig. 5 for electrode placement).

First, in step 901, the system is initialized by, for example, sending a reset command from the RESET circuit 703 to the CPU 630 (see Fig. 7).

Next, in step 910, the CPU 630 controls the first switch array 710 to form selected pairs of the electrodes 511, 512, 521 and 522, each selected pair being formed by a transmitting electrode connected to the signal generator 610 and a receiving electrode from which currents are measured. Specifically, a current path r12 is measured by transmitting from electrode 511 and measuring the resulting current in electrode 512. Similarly, current paths r13 (transmit from electrode 511, receive at electrode 521), r21 (transmit from electrode 512, receive at electrode 511), r24 (transmit from electrode 512, receive at electrode 522), and r31 (transmit from electrode 521, receive at electrode 511) are measured. Each of these measurements is compared with a first set of threshold values TP1 and TP2 which are experimentally determined and stored in EEPROM 635 or calculated using a first or second degree function. A person is "detected" (yes branch of step 910) when the following logical expression is satisfied: (r12>TP1) AND (r13>TP1) AND (r21>TP1) AND (r24>TP2) AND (r31>TP1). If a person is "detected", then control passes to optional step 915 which may include, for example, indicating detection using an LED or other indicator. Control is then passed to step 960 in which a "deploy" signal is transmitted from the CPU 630 to the passenger restraint system, thereby arming an airbag for deployment in the event of a collision. If the above logical expression is not satisfied, control is passed to step 920.

In step 920, the CPU 630 controls the first switch array 710 to form a second set of selected pairs of the electrodes 511, 512, 521 and 522. Specifically, measurements are taken on current paths r43 (transmit from electrode 522, receive at electrode 521), r42 (transmit from electrode 522, receive at electrode 512), r41 (transmit from electrode 522, receive at electrode 511), r24 (transmit from electrode 512, receive at electrode 522), r21 (transmit from electrode 512, receive at electrode 511), r14 (transmit from electrode 511, receive at electrode 522), and r12 (transmit from electrode 511, receive at electrode 512). Each of these measurements is compared with a second set of threshold values TF1, TF2, TF3, TF4, TF5, TF6, TF7 and TF8 which are experimentally determined and stored in EEPROM 635 or calculated using a first or second degree function. A front-facing child seat (FFCS) is "detected" (yes branch of step 920) when the following logical expression is satisfied: (r43>TF1) AND (r42>TF2) AND (r41>TF3) AND ((r41-r42>TF4) OR (r41-r43>TF5) OR (r42-r43>TF6)) AND (r24-r21>TF7) AND (r14-r12>TF8). If a front-facing child seat is "detected", then control passes to optional step 925 which may include, for example, indicating detection using an LED or other indicator. Control is then passed to step 960 in which a "deploy" signal is transmitted from the CPU 630 to the passenger restraint system, thereby arming an airbag for deployment in the event of a collision. If the above logical expression is not satisfied, control is passed to step 930.

In step 930, the CPU 630 controls the first switch array 710 to form a third set of selected pairs of the electrodes 511, 512, 521 and 522. Specifically, measurements are taken on current paths r13 (transmit from electrode 511, receive at electrode 521), r31 (transmit from electrode 521, receive at electrode 511), r12 (transmit from electrode 511, receive at electrode 512), r21 (transmit from electrode 512, receive at electrode 511), r34 (transmit from electrode 521, receive at electrode 522), and r43 (transmit from electrode 522, receive at electrode 521). Each of these measurements is compared with a third set of threshold values TB1, TB2 and TB3 which are experimentally determined and stored in EEPROM 635 or calculated using a first or second degree function. A booster seat is "detected" (yes branch of step 930) when the following logical expression is satisfied: (r13>TB1) AND (r31>TB1) AND (r12>TB2) AND (r21>TB2) AND (r34>TB3) AND (r43>TB3). If a booster child seat is "detected", then control passes to optional step 935 which may include, for example, indicating detection using an LED or other indicator. Control is then passed to step 960 in which a "deploy" signal is transmitted from the CPU 630 to the passenger restraint system, thereby arming an airbag for deployment in the event of a collision. If the above logical expression is not satisfied, control is passed to step 940.

In step 940, the CPU 630 controls the first switch array 710 to form a fourth set of selected pairs of the electrodes 511, 512, 521 and 522. Specifically, measurements are taken on current paths r12 (transmit from electrode 511, receive at electrode 512), r13 (transmit from electrode 511, receive at electrode 521), r14 (transmit from electrode 511, receive at electrode 522), r31 (transmit from electrode 521, receive at electrode 511), and r43 (transmit from electrode 522, receive at electrode 521). Each of these measurements is compared with a fourth set of threshold values TR1, TR2, TR3, TR4 and TR5 which are experimentally determined and stored in EEPROM 635 or calculated using a first or second degree function. A rear-facing infant seat (RFIS) is "detected" (yes branch of step 940) when the following logical expression is satisfied: (r12>TR1) AND (r13>TR2) AND (r14>TR3) AND (r13-r14>TR4) AND (r31-r43>TR5) . If a rear-facing infant seat is "detected", then control passes to optional step 945 which may include, for example, indicating detection of the rear-facing infant seat using an LED or other indicator. Control is then passed to step 970 in which a "non-deploy" signal is transmitted from the CPU 630 to the passenger restraint system, thereby disarming an airbag adjacent the vehicle seat in the event of a collision. If the above logical expression is not satisfied, control is passed to step 950.

In step 950, the CPU 630 controls the first switch array 710 to form a fifth set of selected pairs of the electrodes 511, 512, 521 and 522. Specifically, measurements are taken on current paths r12 (transmit from electrode 511, receive at electrode 512), r13 (transmit from electrode 511, receive at electrode 521), r14 (transmit from electrode 511, receive at electrode 522), r24 (transmit from electrode 512, receive at electrode 522), and r34 (transmit from electrode 521, receive at electrode 522). Each of these measurements is compared with a fifth set of threshold values TE1, TE2, TE3, TE4, TE5 and TE6 which are calculated using a first degree function (e.g., y=ax+b) or a second degree function (e.g., y=ax²+bx+c), and a sixth set of threshold values TE11, TE22, TE33, TE44, TE55 and TE66 which are stored in EEPROM 635. An empty seat is "detected" (yes branch of step 950) when the following logical expression is satisfied: (ABS(r12-TE1)<TE11) OR (ABS(r12-TE2)<TE22) AND (ABS(r13-TE3)<TE33) AND (ABS(r14-TE4)<TE44) AND (ABS(r24-TE5)<TE55) AND (ABS(r34-TE6)<TE66), where "ABS(r(i,j)-TE(k))" means the absolute value of r(i,j) minus TE(k). If an empty seat is "detected", then control passes to optional step 953 which may include, for example, indicating detection of the empty seat using an LED or other indicator. Control is then passed to step 970 in which a "non-deploy" signal is transmitted from the CPU 630 to the passenger restraint system, thereby disarming an airbag adjacent the vehicle seat in the event of a collision. If the above logical expression is not satisfied, control is passed to optional step 957 which may include, for example, indicating detection that something other than an empty seat has been detected.

After the CPU 630 sends a "deploy" command (step 960) or a "non-deploy" command (step 970), control is passed again to step 910 and the process is repeated. In this way, movement and or shifting of passengers is detected, thereby preventing undesirable deployment of an airbag, for example, when a passenger is leaning forward.

The above-described process only utilizes electrodes 511, 512, 521 and 522 to detect the presence of adult passengers, front-facing child seats, booster seats, rear-facing infant seats, empty seats or "something". Further resolution may be obtained using more sophisticated combinations of electrode pairs in order to detect the precise location of a passenger, thereby disabling the passenger restraint system when the passenger is in a position in which deployment may cause injury. For example, if a passenger is seated at an extreme forward position of the vehicle seat, deployment of an airbag may injure the passenger. Therefore, step 957 of the above process may be modified to verify the passenger's position by taking measurements on current paths r15 (transmit from electrode 511, receive at electrode 516) and r16 (transmit from electrode 511, receive at electrode 517) (refer to Fig. 5). This information can be used to verify the passenger's extreme-forward position, and may be used, for example, to transmit an instruction telling the passenger to move back into a proper position on the seat so that the passenger restraining system will deploy.

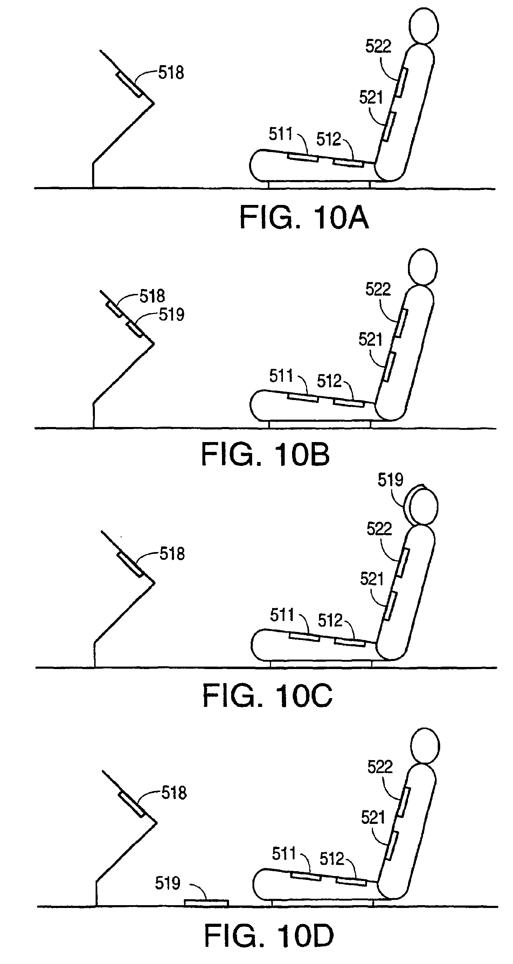

Although the present invention has been described in considerable detail with reference to certain preferred embodiments thereof, other embodiments are possible. For example, as shown in Figs. 10(A) through 10(D), one or more electrodes 518 and 519 may be positioned, on the dashboard (Figs. 10 (A) and 10(B)), the dashboard and headrest (Fig. 10(C), or the dashboard and floor (Fig. 10(D) to provide additional resolution for detecting out-of-position passengers who may be injured by activation of an airbag.

## Claims

1. A vehicle passenger sensing system comprising:
a signal generator (80) for generating an alternating current signal;
a first electrode (30) mounted on a vehicle seat (20) and connected to the signal generator (80); and
a second electrode (40) mounted on the vehicle seat (20) and spaced from the first electrode (30);
**characterised in that** the first electrode (30) generates an electric field in response to said alternating current signal and a first current is generated in the second electrode (40) in response to the electric field and a passenger in the vehicle seat (20), and the system further comprises:
a controller (60) for measuring the first current, and for generating a command signal in response to a logical expression depending on a magnitude of the first current; and
a processing unit (630) operative to:
output a deploy signal when a first logical expression is satisfied indicating the presence of the passenger in the vehicle seat; and
output a non-deploy signal when a second logical expression is satisfied indicating the presence of a non-passenger object in the vehicle seat..

2. The passenger sensing system according to claim 1,
wherein the vehicle seat (20) includes a metal support member (553) forming a ground plane; and
wherein each of the first (30) and second (40) electrodes comprises a conductive layer (341) formed on an insulating layer (342), the insulating layer (342) being disposed between the conductive layer (341) and the metal support member (553) such that the conductive layer (341) is electrically insulated from the metal support member (553).

3. The passenger sensing system according to claim 1, wherein the first (30) and second electrodes (40) comprises first (341) and second metal (343) layers separated by an insulation layer (342), the first metal layer (341) being selectively connected to one of the controller (60) and the signal generator (80), and the second metal layer (343) being connected to ground.

4. The passenger sensing system according to claim 1, further comprising:
a third electrode (50) mounted on the vehicle seat (20) and spaced from the first (30) and second (40) electrodes, such that a second current is generated in the third electrode (50) in response to the electric field and a passenger in the vehicle seat (20);
wherein the controller (60) generates the restraint system command signal in response to a comparison between the first current and the second current.

5. The passenger sensing system according to claim 4, wherein the second electrode (40) is mounted on a base portion (22) of the vehicle seat (20), and the third electrode (50) is mounted on a back support portion (24) of the vehicle seat (20).

6. The passenger sensing system according to claim 4, wherein the controller (60) further comprises a switching circuit for selectively connecting one of the first electrode (30) and the second electrode (40) to the signal generator (80), and for selectively connecting one of the first electrode (30) and the second electrode (40) to an input terminal of the controller (60).

7. A method for sensing a passenger in a vehicle seat (20), the method **characterised by** comprising the steps of:
transmitting an electric field from a first electrode (30) at a first location on the vehicle seat (20) by applying to said first electrode (30) an alternating current signal generated by a signal generator (80);
measuring a first current induced by the electric field in a second electrode (40) located at a second location on the vehicle seat (20), the second electrode (40) being spaced from the first electrode (30) and the first current being responsive to the electric field and a passenger in the vehicle seat (20); and
outputting a deploy signal when a first logical expression is satisfied indicating the presence of the passenger in the vehicle seat; and
outputting a non-deploy signal when a second logical expression is satisfied indicating the presence of a non-passenger object in the vehicle seat,
the logical expressions are depending on the magnitude of the first current.

8. The method according to claim 7, further comprising:
measuring a second current induced by the electric field in a third electrode (50) located at a third location on the vehicle seat (20), the first, second and third locations being spaced from each other; and
comparing the first and second currents.

9. The method according to claim 8, wherein the method further comprises:
transmitting an electric field from the second location on the vehicle seat (2a) ;
measuring a strength of the electric field at the first location on the vehicle seat (20);
measuring a strength of the electric field at the third location on the vehicle seat (20) ; and
comparing the electric field strengths measured at the first and third locations.

10. The method according to claim 8, wherein the method further comprises:
transmitting a de-activation command signal to an airbag control circuit (70) when the first current is greater than the second current.

## Patentansprüche

1. Passagier-Erkennungssystem für ein Fahrzeug, umfassend:
einen Signalgenerator (80) zum Erzeugen eines alternierenden Stromsignals,
eine erste Elektrode (30), die auf einem Fahrzeug-Sitz (20) angebracht ist und mit dem Signalgenerator (80) verbunden ist, und eine zweite Elektrode (40), die auf dem Fahrzeug-Sitz (20) angebracht ist und von der ersten Elektrode (30) im Abstand angeordnet ist, **dadurch gekennzeichnet, dass** die erste Elektrode (30) ein elektrisches Feld in Antwort auf das alternierende Stromsignal erzeugt, und
dass ein erster Strom in der zweiten Elektrode (40) erzeugt wird in Antwort auf das elektrische Feld und einen Passagier auf dem Fahrzeug-Sitz (20), und
dass das System ferner umfasst:
einen Kontroller (60) zum Messen des ersten Stroms und zum Erzeugen eines Kommandosignals in Antwort auf einen logischen Ausdruck, der von einer Größe des ersten Stroms abhängt, und eine Verarbeitungseinheit (630), die betriebsbereit ist zum:
Ausgeben eines Auslösesignals, wenn ein erster logischer Ausdruck erfüllt ist, der das Vorhandensein eines Passagiers auf dem Fahrzeug-Sitz anzeigt, und
Ausgeben eines Nicht-Auslösesignals, wenn ein zweiter logischer Ausdruck erfüllt ist, der das Vorhandensein eines Objekts auf dem Fahrzeug-Sitz, das kein Passagier ist, anzeigt.

2. Passagier-Erkennungssystem nach Anspruch 1,
wobei der Fahrzeug-Sitz (20) ein Metall-Abstützelement (553) umfasst, das eine Boden-Ebene bildet, und wobei jede der ersten (30) und zweiten (40) Elektrode eine leitende Schicht (341) umfasst, die auf einer isolierenden Schicht (342) gebildet ist,
wobei die isolierende Schicht (342) zwischen der leitenden Schicht (341) und dem Metall-Abstützelement (553) derart angeordnet ist, dass die leitende Schicht (341) elektrisch von dem Metall-Abstützelement (553) isoliert ist.

3. Passagier-Erkennungssystem nach Anspruch 1,
wobei die erste (30) und zweite (40) Elektrode eine erste (341) und eine zweite (343) Metallschicht umfasst, die durch eine isolierende Schicht (342) getrennt sind,
wobei die erste Metallschicht (341) selektiv entweder mit dem Kontroller (60) oder dem Signalgenerator (80) gekoppelt ist, und wobei die zweite Metallschicht (343) geerdet ist.

4. Passagier-Erkennungssystem nach Anspruch 1,
ferner umfassend:
eine dritte Elektrode (50), die auf dem Fahrzeug-Sitz (20) angebracht ist und von der ersten (30) und zweiten (40) Elektrode im Abstand angeordnet ist, derart, dass ein zweiter Strom in der dritten Elektrode (50) in Antwort auf das elektrische Feld und einen Passagier auf dem Fahrzeug-Sitz (20) erzeugt wird,
wobei der Kontroller (60) das Zurückhalte-System-Kommandosignal in Antwort auf einen Vergleich zwischen dem ersten Strom und dem zweiten Strom erzeugt.

5. Passagier-Erkennungssystem nach Anspruch 4,
wobei die zweite Elektrode (40) auf einem Basisabschnitt (22) des Fahrzeug-Sitzes (20) angebracht ist, und
wobei die dritte Elektrode (50) auf einem Rücken-Abstützabschnitt (24) des Fahrzeug-Sitzes (20) angebracht ist.

6. Passagier-Erkennungssystem nach Anspruch 4,
wobei der Kontroller (60) ferner einen Umschalt-Schaltkreis zum selektiven Verbinden entweder der ersten Elektrode (30) oder der zweiten Elektrode (40) mit dem Signalgenerator (80) und zum selektiven Verbinden entweder der ersten Elektrode (30) oder der zweiten Elektrode (40) mit einem Eingangsanschluss des Kontrollers (60) umfasst.

7. Verfahren zum Erkennen eines Passagiers auf einem Fahrzeug-Sitz, wobei das Verfahren **dadurch gekennzeichnet ist, dass** es die folgenden Schritte umfasst:
Übertragen eines elektrischen Feldes von einer ersten Elektrode (30) an eine erste Position auf dem Fahrzeug-Sitz (20) durch Anlegen eines alternierenden Stromsignals an die erste Elektrode (30), das durch einen Signalgenerator (80) erzeugt wird,
Messen eines ersten Stroms, der durch das elektrische Feld in einer zweiten Elektrode (40) induziert wird, die an einer zweiten Position auf dem Fahrzeug-Sitz (20) angeordnet ist,
wobei die zweite Elektrode (40) im Abstand von der ersten Elektrode (30) angeordnet ist und der erste Strom in Antwort auf das elektrische Feld und einen Passagier auf dem Fahrzeug-Sitz (20) erfolgt, und Ausgeben eines Auslösesignals, wenn ein erster logischer Ausdruck erfüllt ist, der das Vorhandensein eines Passagiers auf dem Fahrzeug-Sitz (20) anzeigt, und
Ausgeben eines Nicht-Auslösesignals, wenn ein zweiter logischer Ausdruck erfüllt ist, der das Vorhandensein eines Objekts auf dem Fahrzeug-Sitz, das kein Passagier ist, anzeigt,
wobei die logischen Ausdrücke von der Größe des ersten Stroms abhängen.

8. Verfahren nach Anspruch 7,
ferner umfassend:
Messen eines zweiten Stroms, der durch das elektrische Feld in einer dritten Elektrode (50) induziert wird, die an einer dritten Position auf dem Fahrzeug-Sitz (20) angeordnet ist, wobei die erste, zweite und dritte Position im Abstand voneinander angeordnet sind, und
Vergleichen der ersten und zweiten Ströme.

9. Verfahren nach Anspruch 8,
wobei das Verfahren ferner umfasst:
Übertragen eines elektrischen Felds von der zweiten Position auf dem Fahrzeug-Sitz (20),
Messen einer Stärke des elektrischen Feldes an der ersten Position auf dem Fahrzeug-Sitz (20),
Messen einer Stärke des elektrischen Feldes an der dritten Position auf dem Fahrzeug-Sitz (20), und
Vergleichen der elektrischen Feldstärken, die an der ersten und dritten Position gemessenen werden.

10. Verfahren nach Anspruch 8,
wobei das Verfahren ferner umfasst:
Übertragen eines Deaktivierungs-Kommandosignals an einen Airbag-Steuerungs-/Regelungsschaltkreis (70), wenn der erste Strom größer als der zweite Strom ist.

## Revendications

1. Système de détection de passager d'un véhicule, comprenant :
un générateur de signal (80), destiné à produire un signal de courant alternatif ;
une première électrode (30) montée sur un siège de véhicule (20) et connectée au générateur de signal (80) ; et
une deuxième électrode (40) montée sur le siège de véhicule (20) et écartée de la première électrode (30) ;
**caractérisé en ce que** la première électrode (30) produit un champ électrique en réponse audit signal de courant alternatif, **en ce qu'**un premier courant est produit dans la deuxième électrode (40) en réponse au champ électrique et à la présence d'un passager dans le siège de véhicule (20), et **en ce que** le système comprend en outre :
un contrôleur (60), destiné à mesurer le premier courant et à produire un signal de commande en réponse à une expression logique dépendant d'une amplitude du premier courant ; et
une unité de traitement (630) en mesure de :
produire en sortie un signal de déploiement lorsqu'une première expression logique indiquant la présence du passager dans le siège de véhicule est satisfaite ; et
produire en sortie un signal de non-déploiement lorsqu'une deuxième expression logique indiquant la présence d'un objet autre qu'un passager dans le siège de véhicule est satisfaite.

2. Système de détection de passager selon la revendication 1,
dans lequel le siège de véhicule (20) comprend un élément métallique porteur (553) formant un plan de masse ; et
dans lequel chacune des première (30) et deuxième (40) électrodes comprend une couche conductrice (341) formée sur une couche isolante (342), la couche isolante (342) étant disposée entre la couche conductrice (341) et l'élément métallique porteur (553), si bien que la couche conductrice (341) est électriquement isolée de l'élément métallique porteur (553).

3. Système de détection de passager selon la revendication 1, dans lequel les première (30) et deuxième (40) électrodes comprennent une première (341) et une deuxième (343) couche métallique, séparées par une couche isolante (342), la première couche métallique (341) étant connectée sélectivement au contrôleur (60) ou au générateur de signal (80) et la deuxième couche métallique (343) étant connectée à la masse.

4. Système de détection de passager selon la revendication 1, comprenant en outre :
une troisième électrode (50) montée sur le siège de véhicule (20) et écartée de la première (30) et de la deuxième (40) électrode, si bien qu'un deuxième courant est produit dans la troisième électrode (50) en réponse au champ électrique et à la présence d'un passager dans le siège de véhicule (20) ;
dans lequel le contrôleur (60) produit le signal de commande du système de retenue en réponse à une comparaison entre le premier courant et le deuxième courant.

5. Système de détection de passager selon la revendication 4, dans lequel la deuxième électrode (40) est montée sur une partie de base (22) du siège de véhicule (20) et la troisième électrode (50) est montée sur une portion d'appui dorsal (24) du siège de véhicule (20).

6. Système de détection de passager selon la revendication 4, dans lequel le contrôleur (60) comprend en outre un circuit de commutation destiné à connecter sélectivement soit la première électrode (30), soit la deuxième électrode (40) au générateur de signal (80) et à connecter sélectivement soit la première électrode (30), soit la deuxième électrode (40) à une borne d'entrée du contrôleur (60).

7. Procédé de détection d'un passager dans un siège de véhicule (20), le procédé étant **caractérisé en ce qu'**il comprend les étapes consistant à :
émettre un champ électrique à partir d'une première électrode (30) en un premier endroit sur le siège de véhicule (20), en appliquant à ladite première électrode (30) un signal de courant alternatif produit par un générateur de signal (80) ;
mesurer un premier courant induit par le champ électrique dans une deuxième électrode (40) située à un deuxième endroit sur le siège de véhicule (20), la deuxième électrode (40) étant écartée de la première électrode (30) et le premier courant constituant une réponse au champ électrique et à la présence d'un passager dans le siège de véhicule (20) ; et
produire en sortie un signal de déploiement lorsqu'une première expression logique indiquant la présence du passager dans le siège de véhicule est satisfaite ; et
produire en sortie un signal de non-déploiement lorsqu'une deuxième expression logique indiquant la présence d'un objet autre qu'un passager dans le siège de véhicule est satisfaite,
les expressions logiques dépendant de l'amplitude du premier courant.

8. Procédé selon la revendication 7, comprenant en outre les étapes consistant à :
mesurer un deuxième courant induit par le champ électrique dans une troisième électrode (50) située à un troisième endroit sur le siège de véhicule (20), les première, deuxième et troisième électrodes étant écartées les unes des autres ; et
comparer le premier et le deuxième courant.

9. Procédé selon la revendication 8, lequel procédé comprend en outre les étapes consistant à :
émettre un champ électrique à partir du deuxième endroit sur le siège de véhicule (20) ;
mesurer une intensité du champ électrique au premier endroit sur le siège de véhicule (20) ;
mesurer une intensité du champ électrique au troisième endroit sur le siège de véhicule (20) ; et
comparer les intensités du champ électrique mesurées au premier et au troisième endroit.

10. Procédé selon la revendication 7, lequel procédé comprend en outre l'étape consistant à :
émettre un signal de commande de désactivation vers un circuit de commande de coussin gonflable de sécurité (70) lorsque le premier courant est supérieur au deuxième courant.
